# EUROPÄISCHE PATENTANMELDUNG

(11) **EP 1 156 215 A1**
(43) Veröffentlichungstag der Anmeldung: **21.11.2001**
(21) Anmeldenummer: 01111827.0
(22) Anmeldetag: 16.05.2001
(51) Int. Cl.: F04B 43/00

(54) **Einrichtung zur Überwachung der Unversehrtheit einer Membran**

(30) Priorität: 18.05.2000 DE 10024118
(71) Anmelder: Firma Carl Freudenberg, 69469 Weinheim (DE)
(72) Erfinder: Röhner, Gerhard, 69502 Hemsbach (DE)

(57) **Zusammenfassung**

Einrichtung zur Überwachung der Unversehrtheit einer aus einer oder mehreren Schichten bestehenden Membran (1) einer Membranfördereinheit mit einer mit einer Schicht verbundenen Widerstandseinrichtung (3) und einer Messeinrichtung die über einen Verbindungszweig (20) mit einer Stromquelle (15) zusammengeschaltet ist, wobei die Messeinrichtung eine Wheatstonsche Brücke (2) ist, bei der die Widerstandseinrichtung (3) in zumindest einem Brückenzweig einen Brückenwiderstand (S1, S2, S3, S4) bildet und ein beginnender Bruch einer Schicht der Membran eine Änderung einer Messdiagonalspannung (B-D) bewirkt.

## Beschreibung

### Technisches Gebiet

Die Erfindung betrifft eine Einrichtung zur Überwachung der Unversehrtheit einer aus einer oder mehreren Schichten bestehenden Membran einer Membranfördereinheit mit einer mit einer Schicht verbundenen Widerstandseinrichtung und einer Messeinrichtung die über einen Verbindungszweig mit einer Stromquelle zusammengeschaltet ist.

### Stand der Technik

In der chemischen und pharmazeutischen Industrie sind Membranpumpen zum Fördern und Dosieren von Flüssigkeiten weit verbreitet. Die Pumpwirkung wird durch eine periodische Auslenkung einer Membran erzielt. Unter einer Membran ist im folgenden eine flexible Schicht zu verstehen die alleine oder in Verbindung mit anderen Schichten in einer Membranfördereinheit einen Förderraum von einem Antriebsraum trennt. Die Auslenkung der Membran kann mechanisch, z.B. durch einen bewegten Metallflansch, pneumatisch oder durch ein Hydraulikfluid bewirkt werden. Eine Fläche der Membran steht dabei direkt mit dem Fördermedium in Kontakt. Je nach Einsatzgebiet kann das Fördermedium giftig, toxisch oder auch feuergefährlich sein. Aus Gründen der Sicherheit und um Schaden an Mensch und Umwelt und an Anlagenteilen weitgehend auszuschließen ist man bestrebt, durch regelmäßige Wartung der Fördereinrichtung und durch Prozessüberwachung ein Austreten des Fördermediums zu verhindern. Die Membran selbst unterliegt einer hohen Wechselbeanspruchung und ist bei diesen Anlagen meist das Bauteil mit der höchsten Ausfallrate. Die Membranbeanspruchung wird vorgegeben durch Betriebsparameter wie beispielsweise der Pumpleistung, der chemischen Zusammensetzung und der Temperatur des Fördermediums. Um das Austreten kritischer Flüssigkeiten sicher zu vermeiden, wechselt man nach einer bestimmten Betriebszeit im Rahmen von Wartungsarbeiten die Membran der Pumpe. Oft ersetzt man aber dabei eine intakte Membran, die noch eine relativ hohe Restlaufzeit aufweist. Aus Gründen der Sicherheit und um diese Wartungsarbeiten möglichst effizient durchführen zu können, ist man bestrebt, durch geeignete Messeinrichtungen bereits Vorschädigungen der Membran messtechnisch zu erfassen. Ein Membranbruch soll möglichst vorausschauend ermittelt werden können. Die Membran soll sicher vor ihrem Versagen, aber mit nur einer geringen Restlaufzeit gewechselt werden. In jedem Fall muss ein beginnender Bruch der Membran oder eine aufgetretene Leckage vom Prozessleitsystem zuverlässig erfasst werden können.

Um an einer bewegten Membran einen Schaden messtechnisch erfassbar zu machen, sind unterschiedliche Einrichtungen bekannt.

In DE-OS 37 29 726 wird eine Membran mit mehreren Schichten vorgeschlagen bei der ein Membranspalt mit einem Melder versehen ist und diesen Spalt überwacht. Wird eine der Schichten zerstört, so dringt das Fluid in den Spalt ein und der Leckmelder erkennt die Störung. Der Melder erfasst aber eine Leckage erst dann, wenn genügend Flüssigkeit ausgetreten ist. Erst dann, wenn die beiden Schichten der Membran genügend weit auseinandergedrückt sind und Flüssigkeit zum Melder gelangt ist, wird der Schaden erkannt.

Auch in DE 40 27 027 C2 wird zur Erkennung einer Bruchstelle einer aus mehreren Schichten bestehenden Membran vorgeschlagen, den Raum zwischen zwei Schichten zu überwachen. Die Pumpe wird hydraulisch betrieben. Der Raum zwischen den beiden Schichten ist so eingestellt, dass gegenüber Atmosphäre ein Unterdruck herrscht. Der Raum ist ursprünglich frei von Flüssigkeit. Bei einer Verletzung einer der äußeren Membranen dringt entweder Hydraulikflüssigkeit oder Förderflüssigkeit in den Raum zwischen den Membranschichten ein. Als Folge davon ändert sich der Druck in diesem Raum. Entweder zum Förderdruck hin oder zum Arbeitsdruck hin. Diese Druckänderung wird in einem mit diesem Raum verbundenen Messraum durch einen Messumformer erfasst. Eine Druckänderung tritt immer dann auf, wenn eine der beiden Schichten des Membranpaares bricht. Es kann aber vorkommen, dass der Verbindungskanal zum Messraum sich nicht öffnet und eine Meldung zu spät oder überhaupt nicht abgegeben wird. Dadurch kann ein Schaden nicht zuverlässig verhindert werden, denn die verbleibende Schicht des Membranpaares kann zwar während einer zeitlich begrenzten Dauer noch die Pumpfunktion wahrnehmen, es ist aber nicht auszuschließen, dass es in rascher Folge zu einem Leck der zweiten Membran kommt. Bei einer hydraulisch betriebenen Pumpe kann Hydraulikfluid in die Förderkammer gelangen. Dies ist immer dann von Nachteil, wenn es auf die hohe Reinheit des geförderten Fluides ankommt.

In WO 95/06205 wird zur Voraussage einer Störung einer Pumpenmembran vorgeschlagen, eine elektrisch leitende Faser aus Polytetrafluorethylen zu verwenden. Diese leitfähige Faser ist in eine Membranschicht aus gleichem Werkstoff eingebettet. Die Faser ist so ausgelegt, dass sie im wesentlichen die gesamte Fläche der Membran in Form einer Spirale oder Doppelspirale oder in Zick-Zack-Form abdeckt. Die Enden der Faser sind am Rand herausgeführt und können an eine elektrische Messvorrichtung angeschlossen werden. Gemessen wird der ohmsche Widerstand der Faser. Sobald die Membranschicht Ermüdungserscheinungen oder Risse aufweist, übertragen sich diese auf die Faser. Da die Faser aus dem gleichen oder sehr ähnlichen Material wie die Membran selbst besteht, ist die Durchbiege-Lebensdauer der Membran etwa die gleiche wie die der Faser. Als Folge der Ermüdungserscheinungen oder der Risse der Membran ändert sich die Leitfähigkeit der Faser, wodurch ein Riss oder beginnender Bruch messtechnisch erfasst und signalisiert werden kann. Von Nachteil ist die sehr aufwendige Herstellung der leitenden Kunststofffaser und deren Einbettung in die Membran. Ein weiterer Nachteil ist die Abhängigkeit der Messgröße von der Temperatur des Fördermediums. Die nachgeschaltete elektronische Signalaufbereitung muss zwischen einer Widerstandsänderung, verursacht durch eine Ermüdungserscheinung, einer Dehnung infolge eines Pumpenhubs und einer temperaturabhängigen Widerstandsänderung unterscheiden.

### Darstellung der Erfindung

Der vorliegenden Erfindung liegt die Aufgabe zugrunde eine Einrichtung zu schaffen, mit deren Hilfe die Unversehrtheit einer Membran in einer Membranfördereinheit auf einfache Weise zuverlässig überwacht werden kann. Die Einrichtung soll sich so weiterbilden lassen, dass die Überwachung möglichst unabhängig von der Temperatur und der Strömung des Förderfluids in der Förderkammer und unabhängig von einer Langzeitabweichung der Messeinrichtung selbst ist.

Gelöst wird diese Aufgabe durch eine Einrichtung, bei der zumindest eine Schicht einer Mehrschichtenmembran mit einer Widerstandseinrichtung und mit einer Messeinrichtung mit einer Stromquelle zusammengeschaltet ist, erfindungsgemäß dadurch, dass die Messeinrichtung nach Art einer Wheatstonsche Brücke arbeitet, bei der die Widerstandseinrichtung in zumindest einem Brückenzweig einen Brückenwiderstand bildet und ein beginnender Bruch einer Schicht der Membran eine Änderung einer Messdiagonalspannung bewirkt.

Durch die Änderung des elektrischen Widerstandes eines mit einer Membranschicht verbundenen resistiven Sensors, der in zumindest einem Brückenzweig einer Widerstandsmessbrücke angeordnet ist, lässt sich auf technisch einfache Weise die Unversehrtheit einer Membran in einer Fördereinheit überwachen. Die Empfindlichkeit der Messbrücke ermöglicht es, einen beginnenden, sich in einer der Schichten der Membran ausweitenden Bruch, zuverlässig bereits im Vorfeld zu erfassen. Wheatstonsche Brücken sind Präzisionsmessgeräte zum Messen von Widerständen durch Vergleich mit eingebauten Widerstanden bekannten Wertes. Im vorliegenden Fall können die Brückenwiderstände der Messeinrichtung mit Vorteil technisch einfach in die Membranfördereinheit integriert werden. Diese Schaltungsanordnung nach Art der Wheatstonschen Brücke führt zu einem einfachen und platzsparenden Aufbau der Überwachungseinrichtung. Die Brückenschaltung ermöglicht in einer günstigen Weiterbildung die Anordnung der Brückenwiderstände so, dass der störende Einfluss der Temperatur des Förderfluids und auch der Langzeitdrift des resistiven Sensors ausgeschaltet werden kann.

Die Widerstandseinrichtung kann aus verschiedenen geeigneten elektrisch leitenden Strukturen wie beispielsweise einer Metallstruktur, einer Leitvliesstruktur, einer Leitkleberstruktur oder aus einer Struktur aus leitenden Kunststoff gebildet werden. Die Herstellung dieser leitenden Strukturen kann beispielsweise durch Ätzen, Schneiden, Stanzen oder durch Drucken erfolgen. Die leitende Struktur kann an einer Fläche einer Schichtenmembran anliegend befestigt sein oder auch in diese Schicht eingebettet werden.

Mit Vorteil ist die Widerstandseinrichtung eine Flächenleiterschlinge deren Material aus einem leitfähigen Kunststoff gebildet wird. Derartige Materialien lassen sich einfach mittels Siebdruck flächig auf eine Membranschicht aufdrucken. Geeignet sind beispielsweise kommerzielle Silberleitkleber auf Polyesterbasis. Besonders bevorzugt ist die Flächenleiterschlinge aus einem elektrisch leitenden Elastomer. Dieses lässt sich ebenfalls technisch einfach an die Membranschicht, beispielsweise durch Siebdruck oder durch Anvulkanisieren, befestigen. Als elektrisch leitfähiges Elastomer ist ein Elastomer zu verstehen, welches durch Vernetzung eines plastisch verformbaren Kautschuks unter Zusatz von elektrisch leitenden Füllstoffen gebildet wird. Der spezifische Widerstand dieser Elastomerleiterschleife lässt sich durch die Konzentration des leitenden Füllstoffes einstellen. Für die Widerstandseinrichtung hat sich eine Elastomerleiterschlinge gebildet aus einem Material mit einem spezifischen elektrischen Widerstand von kleiner als 300 Ohm Zentimeter bewährt.

Es ist vorteilhaft, wenn die Widerstandseinrichtung aus zwei elektrischen Widerständen einer Flächenleiterschlinge gebildet wird und diese mit einer Schicht der Membran anliegend verbunden sind. Dabei wird die Wheatstonsche Brücke mit diesen und mit zwei elektrischen Vergleichswiderständen, die nicht mit der Membran verbunden sind, gebildet. In dieser Anordnung wirkt in beiden Brückenzweigen der Einfluss der Temperatur des Fördermediums gleichzeitig auf beide Widerstände S1 und S2. Unter der Voraussetzung, dass S1 und S2 gleiches Temperaturverhalten zeigen, ist die Messdiagonalspannung zwischen den Punkten B und D der Wheatstonschen Brücke unabhängig von der Temperatur des Fördermediums. Auch das Langzeitverhalten der elektrischen Widerstände S1 und S2 wirkt in der Brückenschaltung symmetrisch. Dies ist von Bedeutung, da sich der elektrische Widerstand einer Elastomerleiterschlinge verringert, wenn die Elastomerleiterschlinge einer mechanischen Beanspruchung unterworfen wird. Der elektrische Widerstand dieser Materialien ist auch zeitlich instabil und ändert sich durch Alterung. Durch die bevorzugte symmetrische Anordnung in zwei Brückenzweigen wird dieser Langzeitabweichung, auch als Drift bezeichnet, ausgeschaltet. Andererseits wird ein beginnender Bruch der Membran, der in einem der Brückenzweige den Wert der Widerstände S1 oder S2 ändert, sicher erkannt. Der Vorteil der Wheatstonschen Brücke liegt darin, dass bereits eine sehr geringe Schädigung des Leiterbahnquerschnitts des Flächenleiters eine signifikante Änderung der Messdiagonalspannung bewirkt. Ein beginnender Bruch kann so sehr frühzeitig erfasst werden.

Es ist auch von Vorteil wenn die Widerstandseinrichtung aus vier elektrischen Widerständen einer Flächenleiterschlinge gebildet wird, welche mit einer Schicht der Membran anliegend verbunden sind und die Wheatstonsche Brücke aus diesen Widerständen gebildet wird. Auf diese Weise wird die Widerstandseinrichtung auf vier Sektoren der Membran symmetrisch verteilt. Zusätzlich zu den oben genannten Vorteilen können nun auch unsymmetrische Strömungsverhältnisse in der Förderkammer und eine damit einhergehende störende Beeinflussung des Messsignals durch die Temperatur des Fördermediums ausgeglichen werden.

Von besonderem Vorteil ist es, wenn eine Schicht der Membran als eine zu einem Förderraum hin liegende Schutzschicht ausgebildet ist und die Flächenleiterschlinge an einer von diesem Förderraum abgewandten Innenfläche der Schutzschicht anvulkanisiert oder mit dieser verklebt ist. Die Ausbildung der Leiterschlinge als Flächenleiter und die Anordnung dieses Flächenleiters an der Schutzschicht bewirkt, dass bei Betrieb der Pumpe die Membran und der Sensor etwa der gleichen Biegewechselbeanspruchung unterworfen sind. Da einem Membranversagen fast immer ein sich von der Förderkammer her in Richtung der Membrtan ausbreitender Riss vorausgeht, kann ein Schaden frühzeitig erkannt werden. Ein Riss in der Schutzschicht verändert die Leitfähigkeit des Flächenleiters und wird messtechnisch erfaßt. Ein Austreten von Förderflüssigkeit aus der Pumpe wird verhindert.

Es ist ganz besonders vorteilhaft wenn die Schutzschicht der Membran aus Polytetrafluorethylen besteht und mit dem gummielastischen Membranteller verbunden ist. Dieser Aufbau der Membran ermöglicht einerseits einen sehr guten Schutz vor aggressiven chemischen Medien. Andererseits ermöglicht die Elastizität des Elastomer eine hohe Betriebszeit. Fast immer versagt die Schutzschicht der Membran bevor der gummielastische Membranteller bricht. Der an der Innenfläche der Schutzschicht angebrachte Überwachungsleiter erfasst also einen beginnenden Bruch bevor die gesamte Membran versagt.

Ganz besonders bevorzugt wird die Flächenleiterschlinge aus einer Materialzusammensetzung gebildet die das gleiche Elastomer wie der Membranteller und einen elektrisch leitenden Füllstoff enthält. Die Verbindung zwischen den Schichten mit dem Sensor lässt sich so sehr gut herstellen. Auch die Fertigung der Membran wird dadurch vereinfacht. Das vorgeformte Sensorelement wird einfach als nicht- oder ausvulkanisiertes Teil beim Verpressen zwischen die Schichten der Membran eingelegt. Durch Klebung oder durch Vulkanisation entsteht eine feste anliegende Verbindung zwischen Sensor und Membranschicht.

Hierbei werden bevorzugt elektrisch leitfähige Füllstoffe als Grafitteilchen oder als Metallteilchen, besonders bevorzugt auch Leitruß, verwendet.

Es kann von ganz besonderem Vorteil sein, wenn das Material der Flächenleiterschlinge eine Biegefestigkeit aufweist, die kleiner ist als die Biegefestigkeit des Materials einer der Schichten der Membran. Indem die Materialeigenschaften des Flächenleiters so gewählt werden, kommt es zu einem Bruch des Sensors bevor sich ein Riss in einer Membranschicht auszubilden beginnt. Mit anderen Worten, die Überwachungseinrichtung signalisiert vor einem Schandensbild eine zu erwartende Materialermüdung der Membran. Insbesondere bei sicherheitskritischen Einsatzgebieten kann auf diese Weise die Membran mit hoher Sicherheit vor ihrem Versagen - aber mit einer nicht zu hohen Restlaufzeit - gewechselt werden.

Mit besonderem Vorteil ist die Flächenleiterschlinge mäanderförmig in einem ringförmigen Verformungsbereich der Membran angeordnet. Hierdurch ist es möglich, dass ein beginnender Riss der Membran sehr frühzeitig erkannt werden kann. Im Querschnitt der Membran gesehen, beginnt ein Riß meist an der zum Förderfluid hin liegenden Fläche der Schutzschicht. Von dort erfolgt eine Ausbreitung in tiefer liegende Bereiche der Schicht. Sieht man in einer Draufsicht auf die Membran, erfolgt das Rißlängenwachstum dann zumeist in Umfangsrichtung. Je nach dem, wie eng die Mäander der Flächenleiterschlinge beabstandet sind, kann bereits eine sehr kleine Verletzung in der Membran sicher erkannt werden. Die Form des Mäanders ermöglicht aber auch, daß eine radiale Ausbreitung eines Risses sicher erfaßt wird.

Mit Vorteil kann die Messeinrichtung in die Membranfördereinheit integriert werden, d.h. die Schaltung der Messeinrichtung wird direkt in einem Teilbereich des Gehäuses der Membranfördereinheit untergebracht. Im Schadensfall wird nur die Membran samt Widerstandseinrichtung gewechselt. Die Messeinrichtung kann eine Signalvorverarbeitung beinhalten und über eine standardisierte elektrische Schnittstelle verfügen. Auf diese Weise können mehrere Fördereinheiten an ein elektronisches Bussystem angeschlossen werden. Ein Prozessleitsystem kann dadurch mehrere Membranpumpen gleichzeitig überwachen. Zur Überwachung der Membran kann die Messelektronik einen Mikrokomputer oder Microcontroller enthalten. Diese digitale Signalverarbeitung ist beispielsweise bei der Inbetriebnahme der Einrichtung von Vorteil: Der Brückenabgleich der Messeinrichtung kann einfach vor Ort durch Start eines Initialisierungsprogramms erfolgen, welches die Diagonalspannung der Messbrücke zu Null setzt. Gleiches gilt bei einem Wechsel der Membran im Rahmen einer Wartungsarbeit.

Auch ist bevorzugt, dass eine Stromüberwachungseinrichtung den zeitlichen Mittelwert des Stromes im Verbindungszweig überwacht. Dies ermöglicht die Funktionsfähigkeit der Überwachungseinrichtung selbst zu überwachen. Beispielsweise führt ein Leiterbruch in der Messeinrichtung zu einer Änderung des Strommittelwertes im Verbindungszweig zwischen der Messeinrichtung und der Stromquelle. In Verbindung mit einem Prozessleitsystems ist dadurch eine Fernüberwachung der Überwachungseinrichtung möglich. Auch der seltene Fall, daß beide Flächenleiterschlingen bei einem Riß gleichzeitig und in gleichem Ausmaß geschädigt werden, ermöglicht diese Stromüberwachungseinrichtung, daß eine Membranschädigung auch in diesem Fall sicher erkannt wird.

Eine sehr empfindliche Überwachungseinrichtung erhält man durch die Anordnung der Widerstanseinrichtung in Form einer Halbbrücke. Hierbei ist günstig, wenn der Widerstandswert der Vergleichswiderstände (R1, R2) zumindest zehn mal so groß wie der Widerstandswert der Flächenleiterschlinge (S1, S2) ist.

Mit Vorteil ist die Flächenleiterschlinge der Pumpenmembran so verlegt, dass die Enden der Schlinge an den äußeren Rand geführt sind und mit elektrischen Verbindern z. B. einem Stecker versehen sind. Dadurch kann die Sensormembran einfach an ein Messgerät, beispielsweise an eine Widerstandsmessbrücke angeschlossen werden. Es ist natürlich auch möglich den Verbinder als Kontaktierungselement auszubilden, so dass der elektrische Anschluss der Widerstandseinrichtung direkt durch Kontakte an den Gehäusehälften im Einspannbereich der Membran erfolgen kann.

Ganz besonders bevorzugt wird eine Elastomerleiterschlinge mit ähnlichen mechanischen Eigenschaften wie die gummielastische Membran selbst. Man erhält diese, in dem man dem Elastomer Leitruß als elektrisch leitfähigen Füllstoff zugibt. Dadurch läßt sich eine Elastomerleiterschlinge herstellen, bei der die Zugfestigkeit zwischen 8 - 25 N/mm² und die Bruchdehnung zwischen 50 bis 400 % liegt, und der spezifische Widerstand dabei kleiner als 300 Ω cm ist. Verglichen mit anderen leitfähigen Kunststoffen, wie sie beispielsweise für elektrisch leitende Fußböden verwendet werden, ist der elektrische Widerstand der Elastomerleiterschlinge niedrig. Der elektrische Widerstand der Leiterschlinge liegt demnach in einem hinsichtlich der Messwertverarbeitung günstigen Bereich.

### Kurzbeschreibung der Zeichnungen

Die Erfindung wird nachstehend anhand einiger in den Zeichnungen dargestellten Ausführungsformen näher erläutert.

Es zeigt:
- Figur 1: eine Einrichtung zur Überwachung der Unversehrtheit einer Membran mit einer Messeinerichtung nach Art einer Wheatstonsche Brücke,
- Figur 2: eine Einrichtung zur Überwachung der Unversehrtheit einer Membran mit einer Messeinerichtung nach Art einer Wheatstonsche Brücke mit zwei elektrischen Widerständen einer elektrischen Flächenleiterschlinge in zwei Brückenzweigen,
- Figur 3: eine Einrichtung zur Überwachung der Unversehrtheit einer Membran mit einer Messeinerichtung nach Art einer Wheatstonsche Brücke mit vier elektrischen Widerständen einer Flächenleiterschlinge in vier Brückenzweigen,
- Figur 4: eine Draufsicht auf eine Pumpenmembran,
- Figur 5: eine Schnittdarstellung durch eine mechanisch betätigte Membran,
- Figur 6: eine Teildarstellung eines Schnittes durch eine Pumpenmembran und
- Figur 7 bis 12: jeweils eine Draufsicht auf eine Pumpenmembran mit einer Flächenleiterschlinge in schematischer Darstellung.

### Ausführung der Erfindung

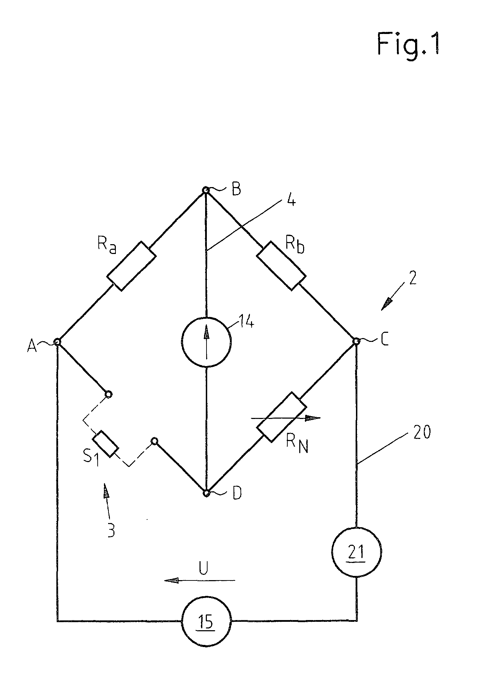

In Figur 1 ist eine Anordnung in Form einer Wheatstonsche Brücke dargestellt bei der die Widerstände Ra, Rb, S1, Rn zu einem Viereck geschaltet sind. Die diagonal gegenüberliegenden Punkte A und C sind über eine Verbindungsleitung 20 mit einer Stromquelle 15 und einer Stromüberwachungseinrichtung 21 verbunden. Die gegenüberliegenden Punkte B und D des Vierecks sind über einen Diagonalzweig 4 mit einem Detektor 14 verbunden. Der Detektor 14 kann nach dem Null- oder Ausschlagsverfahren eine Differenz- oder Diagonalspannung zwischen den Punkten B und D erfassen. im abgeglichenen Zustand der Messbrücke ist die Messdiagonalspannung zwischen den Punkten B und D des Vierecks Null.

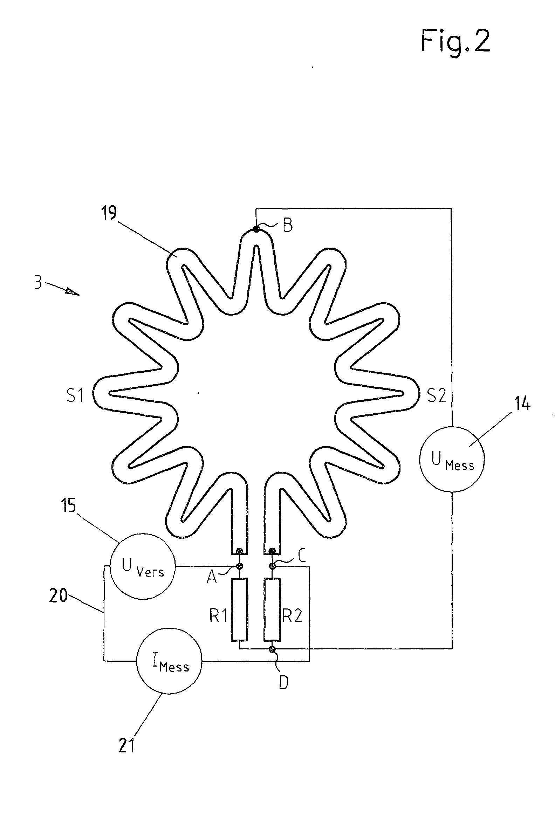

In Figur 2 ist eine Wheatstonsche Brücke dargestellt bei der das Widerstandelement 3 durch eine Flächenleiterschlinge 19 gebildet wird. Die Flächenleiterschlinge 19 ist zwischen die Punkte B, A und B, C der Brücke geschaltet. Die externen Brückenwiderstände sind mit R1 und R2 bezeichnet, die Ohmschen Widerstände der Flächenleiterschlinge mit S1 und S2. In Figur 2 ist die Flächenleiterschlinge mäanderförmig gezeichnet. Sie befindet sich in direktem Kontakt mit einer nicht in Figur 2 dargestellten Schicht einer Membran. Sobald sich in der Membran 1 ein Bruch auszubreiten beginnt, wirkt dieser auf die anliegende Flächenleiterschlinge 19 und bewirkt eine Verringerung der Leiterfläche der Flächenleiterschlinge 19. Als Folge davon ändert sich der elektrische Widerstand S1 oder S2 der Flächenleiterschlinge 19. Die Änderung des elektrischen Widerstandes S1 oder S2 hat in der Brückenschaltung zur Folge, dass sich zwischen den Punkten B und D des Vierecks der Wheatstonsche Brücke eine Potentialdifferenz einstellt, die der Schädigung des Leiterbahnquerschnitts der Widerstandseinrichtung 3 entspricht. Durch die Anordnung in Form einer Wheatstonsche Brücke ist es möglich bereits eine sehr geringfügige Schädigung an der Flächenleiterschlinge zu erfassen. Durch Ausführungsbeispiele konnte gezeigt werden, daß sich mit der erfindungsgemäßen Anordnung bereits etwa eine 22%-Schädigung des Leiterbahnquerschnitts sicher sensieren läßt. Verglichen mit einer einfachen Widerstandserfassung ist die Brückenschaltung doppelt so empfindlich. Die Anordnung der elektrischen Widerstände S1 und S2, in Form einer Halbbrückenschaltung gemäß Figur 2 hat den Vorteil, dass sich die Temperatur des Fördermediums nicht auf die Messgröße störend auswirkt. Auch eine Widerstandsänderung bedingt durch Beanspruchung oder Alterung des Materials der Flächenleiterschlinge 19 führt nicht zu einer Änderung der Messdiagonalspannung zwischen den Punkten B und D. Durch die in Figur 2 gezeigte Weiterbildung der Erfindung wird die Einrichtung also unabhängig von störenden Einflüssen des Fördermediums und von Langzeitdrift. Die Vergleichswiderstände R1 und R2 können unmittelbar im Gehäuse der Membranfördereinheit zusammen mit einer Auswerteelektronik untergebracht werden, wodurch ein einfacher und kompakter Aufbau der Überwachungseinrichtung vor Ort möglich ist. Hinsichtlich der messtechnischen Empfindlichkeit der Überwachungseinrichtung ist es von Vorteil, wenn der Widerstandswert der Vergleichswiderstände R1 und R2 jeweils größer ist als der Widerstand S1 und S2 der Flächenleiterschlinge. Es hat sich bei der praktischen Ausführung der Halbbrücke gemäß Fig. 2 bewährt, wenn der Widerstandswert der Vergleichswiderstände etwa zehn mal so groß wie der Widerstandswert der Flächenleiterwiderstände gewählt wird.

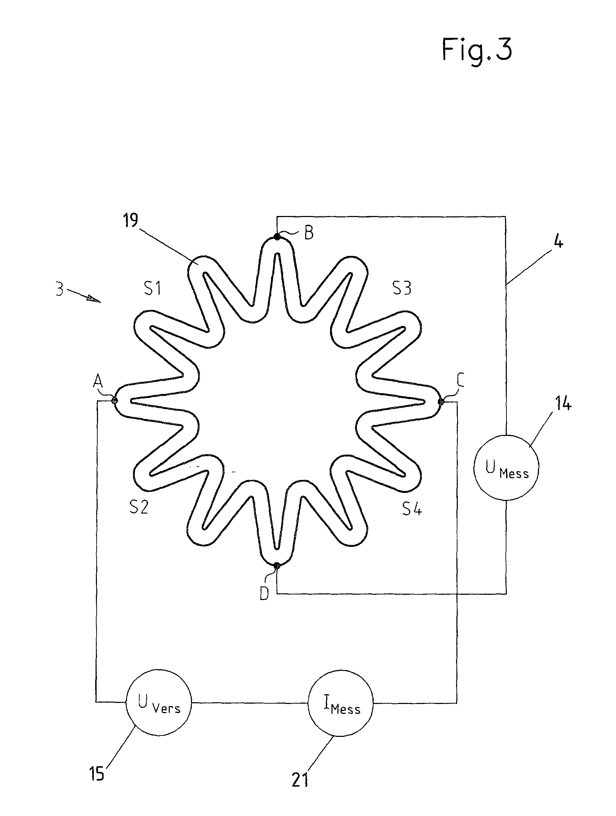

In Figur 3 ist eine weitere vorteilhafte Ausgestaltung der Erfindung dargestellt. Das Widerstandsviereck wird hier durch die Widerstände S1, S2, S3, S4 der Flächenleiterschlinge 19 gebildet. Damit decken die einzelnen Brückenwiderstände Sektoren der Membran ab. Geometrisch sind die einzelnen Widerstände also symmetrisch im Verformungsbereich der Membran angeordnet. Dadurch können Störungen, verursacht durch Bewegung und Temperatur des Fördermediums, besser ausgeglichen werden. Unsymmetrische Strömungsverhältnisse in der Membran wirken jeweils in zwei Brückenzweigen, so dass es nicht zu einer ungewollten Veränderung der Messdiagonalspannung aufgrund der Strömungsverhältnisse in der Förderkammer kommt. Auch hier sind die Diagonalpunkte A, B, C und D des Vierecks mit einer Energieversorgung 15, mit einer Stromüberwachungseinrichtung 21 und mit einer Messeinrichtung 14 verschaltet.

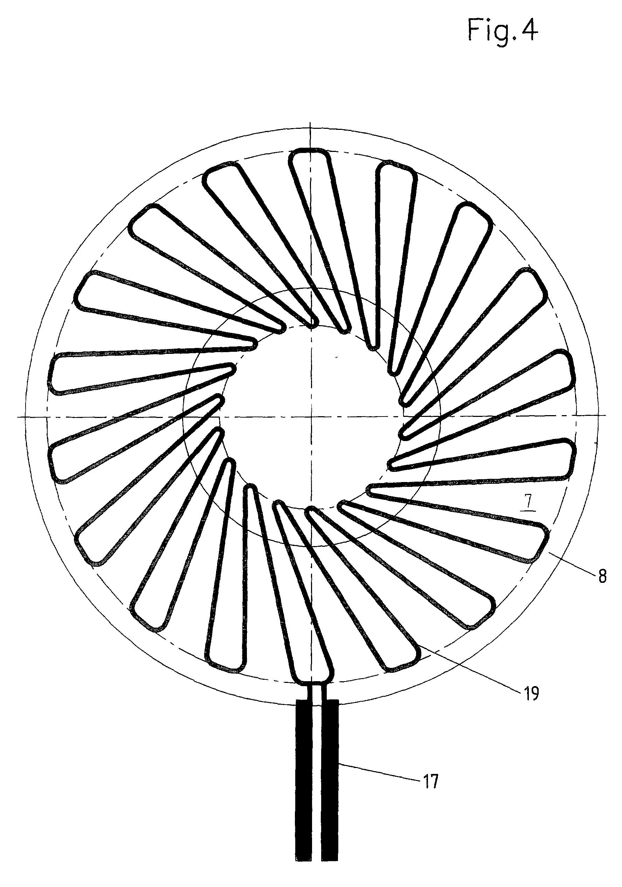

In Figur 4 ist eine Draufsicht auf eine Pumpenmembran mit einer Flächenleiterschlinge 19 dargestellt, deren Enden in einen Einspannbereich 8 der Membran 1 geführt und dort mit einem Verbinder 17 zum Anschluss an eine nicht dargestellte Messeinrichtung versehen sind.

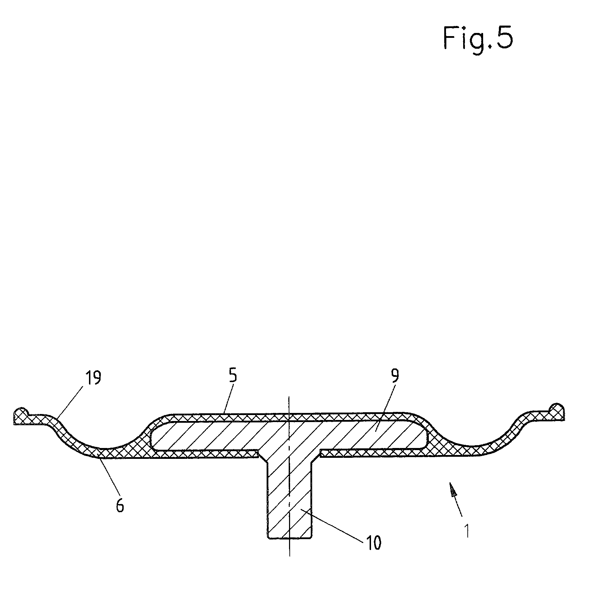

Ein Schnitt durch eine mechanisch betätigte Membran ist in Figur 5 dargestellt. Die Schnittzeichnung zeigt einen metallischen Flansch 9 der in eine gummielastische Schicht 6 der Membran eingebettet ist. Die Elastomerschicht 6 ist zur Förderkammer hin mit einer Schutzschicht 5 bedeckt und die Flächenleiterschlinge 19 befindet sich zwischen Schutzschicht 5 und der gummielastischen Schicht 6 der Membran. Die Auslenkung der Membran erfolgt durch einen nicht dargestellten Antrieb, der auf den Zapfen 10 wirkt.

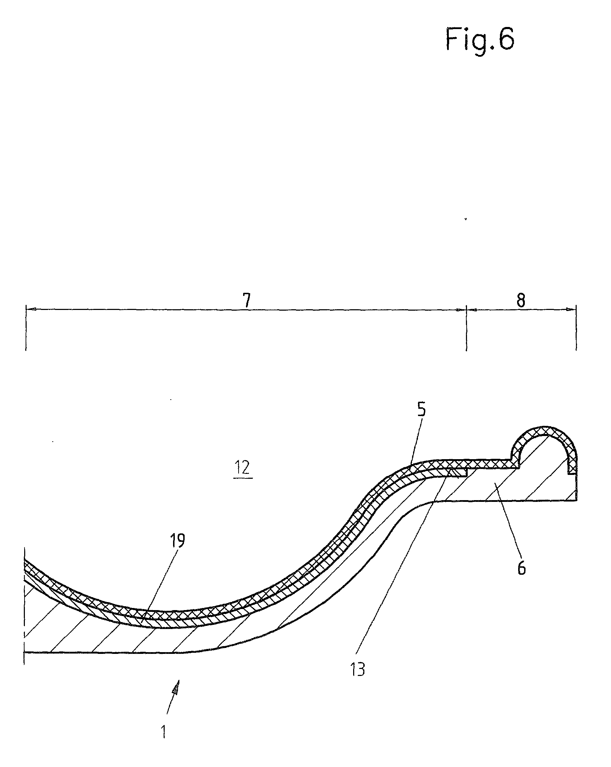

Eine Teilschnittdarstellung einer Mehrschichtpumpenmembran ist in Figur 6 gezeigt. Die Flächenleiterschlinge 19 ist dabei an einer von der Förderkammer 12 abgewandten Innenfläche 13 der Schutzschicht 5 anliegend befestigt und von gummielastischem Material der Membranschicht 6 eingebettet. Die Flächenleiterschlinge überdeckt dabei einen dynamischen Bereich 7 der Membran 1, der sich an einen Einspannbereich 8 anschließt.

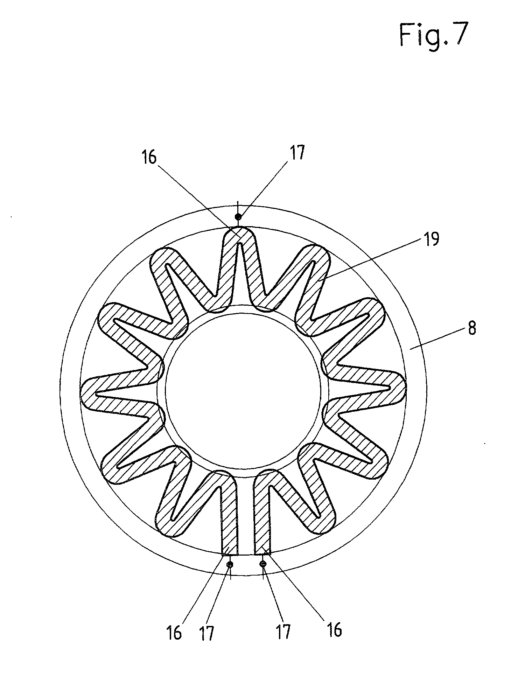

Unterschiedliche Möglichkeiten der Kontaktierung einer Flächenleiterschlinge sind in den Figuren 7 bis 12 in einer Draufsicht dargestellt. Es ist vorteilhaft, wenn die Kontaktierung der Flächenlaiterschleife außerhalb des dynamisch beanspruchten Membranbereichs, z.B. im Einspannbereich 8 der Membran erfolgt.

In Figur 7 sind die Enden 16 der Flächenleiterschlinge 19 im Einspannbereich 8 mit einem elektrischen Verbinder 17 versehen. Im Schandesfall wird die erfindungsgemäße Pumpenmembran samt Verbinder 17 gewechselt.

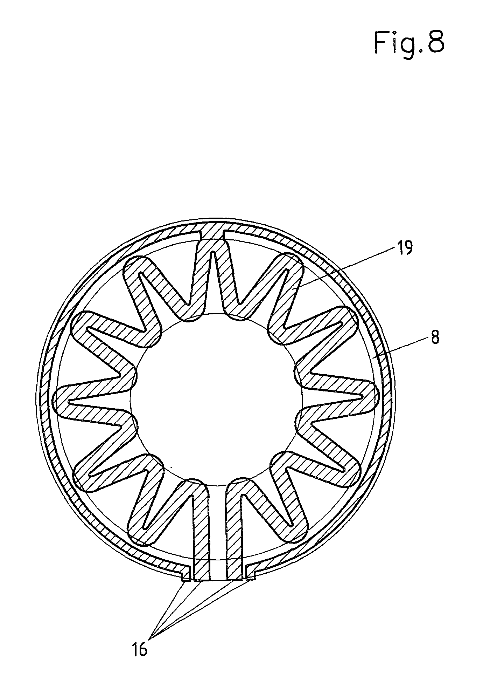

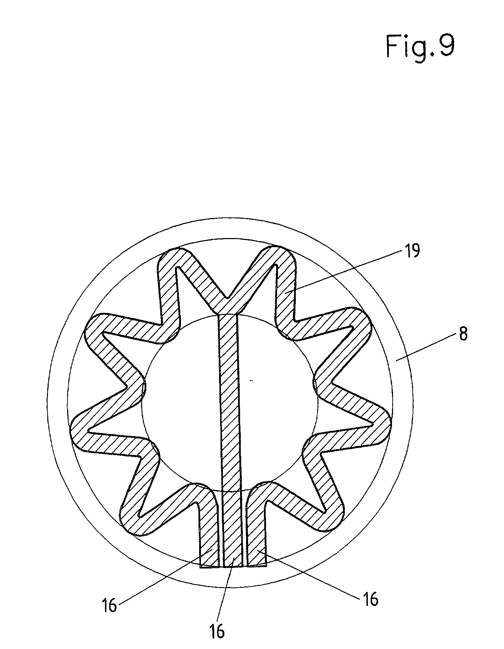

In Figur 8 und 9 sind unterschiedliche Möglichkeiten dargestellt, wie die Enden 16 der Flächenleiterschlinge 19 zentrtal im Einspannbereich 8 zusammengeführt werden können.

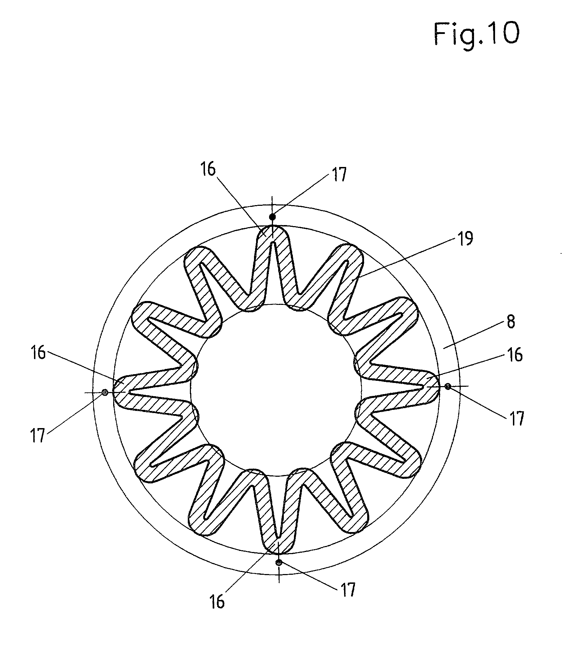

In Figur 10 sind die Enden 16 der Flächenleiterschlinge 19 jeweils mit elektrischen Verbindern 17 versehen. Die dargestellte Anordnung auf der Membran entspricht der Vollbrückenschaltung gemäß der Figur 3. Der elektrische Anschluß der Schlinge 19 erfolgt vorteilhaft durch elektrische Verbinder 17 im Einspannbereich 8.

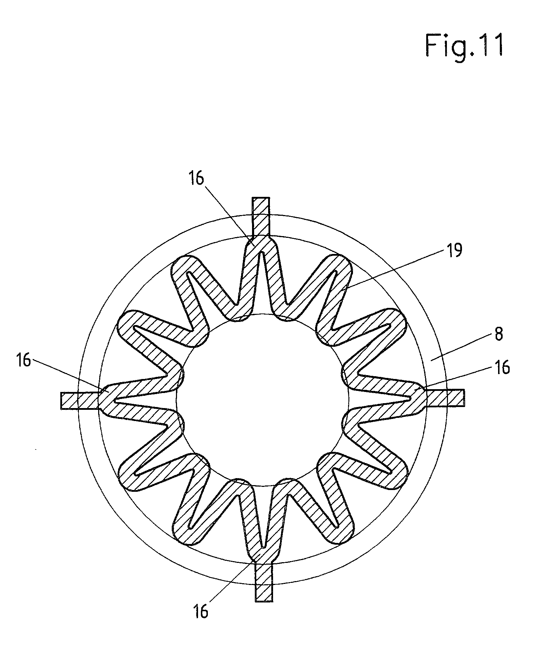

Figur 11 zeigt eine Flächenleiterschleife 19 mit Enden 16 die über den äußeren Einspannbereich 8 herausgeführt sind. Die Kontaktierung erfolgt bei dierser Ausführungsform der Membran außerhalb des Einspannbereichs 8.

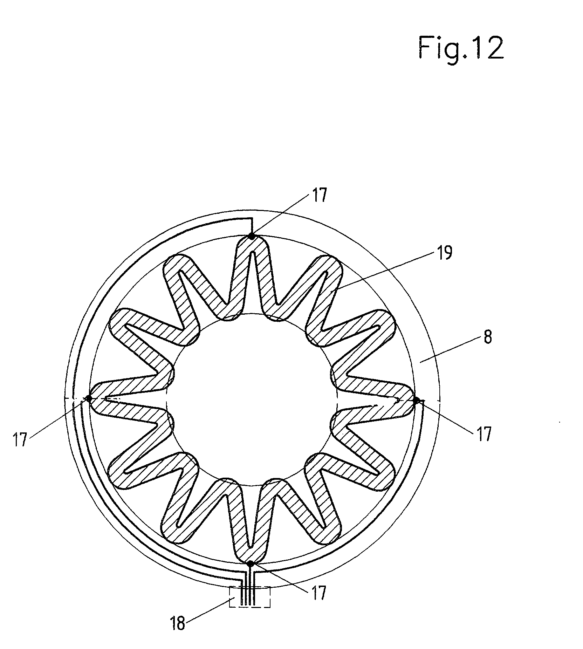

Eine bevorzugte Anschlusstechnik ist in Figur 12 gezeigt. Die Verbinder 17 sind hier mit elektrischen Anschlüssen verbunden die im Einspannbereich 8 zusammengeführt sind und in einem Steckanschluss 18 enden.

## Patentansprüche

1. Einrichtung zur Überwachung der Unversehrtheit einer aus einer oder mehreren Schichten bestehenden Membran (1) einer Membranfördereinheit mit einer mit einer Schicht verbundenen Widerstandseinrichtung (3) und einer Messeinrichtung die über einen Verbindungszweig (20) mit einer Stromquelle (15) zusammengeschaltet ist, **dadurch gekennzeichnet, dass** die Messeinrichtung eine Wheatstonsche Brücke (2) ist, bei der die Widerstandseinrichtung (3) in zumindest einem Brückenzweig einen Brückenwiderstand (S1, S2, S3, S4) bildet und ein beginnender Bruch einer Schicht der Membran eine Änderung einer Messdiagonalspannung (B-D) bewirkt.

2. Einrichtung nach Anspruch 1, **dadurch gekennzeichnet, dass** die Widerstandseinrichtung (3) eine Flächenleiterschlinge (19) aus elektrisch leitfähigem Kunststoff, besonders bevorzugt aus einem elektrisch leitenden Elastomer ist.

3. Einrichtung nach Anspruch 1 oder 2, **dadurch gekennzeichnet, dass** die Widerstandseinrichtung (3) aus zwei elektrischen Widerständen (S1, S2) einer Flächenleiterschlinge (19), die mit einer Schicht der Membran (1) anliegend verbunden ist besteht, und die Wheatstonsche Brücke mit diesen und mit zwei elektrischen Vergleichswiderständen (R1, R2), die nicht mit der Membran verbunden sind, gebildet wird.

4. Einrichtung nach Anspruch 1 oder 2, **dadurch gekennzeichnet, dass** die Widerstandseinrichtung (3) aus vier elektrische Widerstände (S1, S2, S3, S4) einer Flächenleiterschlinge (19) besteht, die mit einer Schicht der Membran (1) anliegend verbunden sind, und die Wheatstonsche Brücke aus diesen Widerständen gebildet wird.

5. Einrichtung nach einem der Ansprüche 3 oder 4, **dadurch gekennzeichnet, dass** eine Schicht der Membran (1) als eine zu einem Förderraum (12) hin liegende Schutzschicht (5) ausgebildet ist und die Flächenleiterschlinge (19) an einer von diesem Förderraum abgewandten Innenfläche (13) der Schutzschicht (5) anvulkanisiert oder mit dieser verklebt ist.

6. Einrichtung nach Anspruch 5, **dadurch gekennzeichnet, dass** die Schutzschicht (5) aus Polytetrafluorethylen und zumindest eine weitere Schicht (6) der Membran (1) aus einem Elastomer ist.

7. Einrichtung nach Anspruch 6, **dadurch gekennzeichnet, dass** das Material der Flächenleiterschlinge (19) gebildet wird aus einer Zusammensetzung aus dem gleichen Elastomer der zumindest einen weiteren Schicht (6) der Membran (1) und einem elektrisch leitfähigen Füllstoff.

8. Einrichtung nach Anspruch 7, **dadurch gekennzeichnet, dass** der elektrisch leitfähige Füllstoff Graphit- oder Metallteilchen oder Leitruß enthält.

9. Einrichtung nach Anspruch 7, **dadurch gekennzeichnet, dass** das Material der Flächenleiterschlinge (19) eine Biegefestigkeit aufweist, die etwa gleich oder kleiner ist als die Biegefestigkeit des Materials einer der Schichten (5, 6) der Membran (1).

10. Einrichtung nach Anspruch 5, **dadurch gekennzeichnet, dass** die Flächenleiterschlinge (19) mäanderförmig in einem ringförmigen Verformungsbereich (7) der Membran (1) angeordnet ist.

11. Einrichtung nach Anspruch 1, **dadurch gekennzeichnet, dass** die Messeinrichtung in der Membranfördereinheit integriert ist.

12. Einrichtung nach einem der Ansprüche 1 bis 3, bei der eine Stromüberwachungseinrichtung (21) den zeitlichen Mittelwert des Stromes im Verbindungszweig (20) überwacht.

13. Einrichtung nach Anspruch 3, **dadurch gekennzeichnet, daß** der Widerstandswert R1, R2 zumindest zehn mal so groß wie der Widerstandswert S1, S2 ist.

14. Pumpenmembran bestehend aus einer oder mehreren Schichten eines flexiblen Materials, die folgende Merkmale aufweist:
a) zumindest eine Schicht der Membran ist mit einer Flächenleiterschlinge eines felxiblen Flächenleiters so verbunden, dass ein beginnender Bruch dieser Schicht eine Änderung des elektrischen Widerstandes des Flächenleiters bewirkt,
b) eine Flächenleiterschlinge weist Enden (16) mit elektrischen Verbindern (17) auf, die am äußeren Rand der Pumpenmembran zum Anschluß an eine Widerstandsmesseinrichtung freiliegen.

15. Pumpenmembran nach Anspruch 14, **dadurch gekennzeichnet, dass** die die Flächenleiterschlinge aus einem elektrisch leitenden Elastomer gebildet wird und Enden (16) aufweist, die zusammengeführt sind und in einem Steckanschluß (18) enden.

16. Pumpenmembran nach Anspruch 13, **dadurch gekennzeichnet, dass** die Flächenleiterschlinge
- einen spezifischen Widerstand von kleiner als 300 Ω cm,
- eine Zugfestigkeit zwischen 8 bis 25 N/mm²,
- eine Bruchdehnung zwischen 50 bis 400 % aufweist.
